# EUROPÄISCHE PATENTANMELDUNG

(11) **EP 2 208 645 A1**
(43) Veröffentlichungstag der Anmeldung: **21.07.2010**
(21) Anmeldenummer: 09179514.6
(22) Anmeldetag: 16.12.2009
(51) Int. Cl.: B60R 13/02

(54) **Verkleidungsteil mit Sensor**

(30) Priorität: 14.01.2009 DE 102009004985
(71) Anmelder: Sellner GmbH, 91564 Neuendettelsau (DE)
(72) Erfinder: Ewert, Michael, 73249 Wernau (DE)
(74) Vertreter: Peter, Julian

(57) **Zusammenfassung**

Die Erfindung betrifft ein Verkleidungsteil an Fahrzeugen mit einer Sichtschicht (3), mit mindestens einem in der Sichtschicht (3) ausgebildeten Leuchtbereich (4), mit einem Träger (5), welcher die Sichtschicht (3) aufnimmt, und mit mindestens einem Leuchtmittel (7) zum mittelbaren oder unmittelbaren Beleuchten des Leuchtbereichs (4).

## Beschreibung

Die Erfindung betrifft ein Verkleidungsteil für Fahrzeuge mit einer Sichtschicht.

### Stand der Technik

Aus der DE 10 2006 008 385 A1 ist eine Kunststoffhaut mit Schaltfunktion bekannt, wobei die ein- oder mehrschichtige Kunststoffhaut als Oberflächenbelag von beschichteten Gegenständen Verwendung findet. Innerhalb der Kunststoffhaut sind Bereiche angeordnet, in denen die Kunststoffhaut eine Schalt-, Sensor- oder Signalübertragungsfunktion aufweist. Diese Bereiche, in denen die Kunststoffhaut ein solches funktionales Element hat, sind an der Außenoberfläche der Kunststoffhaut angeordnet. Die Kunststoffhaut wird mittels des sog. Rotationssinterverfahrens hergestellt, wobei in den äußeren Oberflächenbereichen der Kunststoffhaut die Schalt-, Sensor- oder Signalübertragungselemente eingeschmolzen und angeordnet sind. Nach Fertigstellung zum Beispiel eines Armaturenbrettes eines Kraftfahrzeuges wird die Kunststoffhaut auf eine entsprechend ausgebildete versteifende Unterkonstruktion aufgebracht.

Aufgrund dieser Aufbauweise stellt sich das Problem der Integrierbarkeit in ältere Fahrzeuge. Diese weisen weder eine Unterkonstruktion noch elektrische Anschlüsse für die Kunststoffhaut auf. Somit sind diese nur unter hohem Kostenaufwand in solchen Fahrzeugen einsetzbar.

Ein weiterer Nachteil ist, dass im Falle einer Reparatur an der Kunststoffhaut diese komplett ausgetauscht werden muss, um einen Fehler zu beseitigen. Hierdurch entstehen wiederum erhöhte Kosten.

Nachteilig ist auch, dass bei dem genannten Herstellungsverfahren die Produktion solcher Armaturenbretter aufwendig ist, da eine für einen derartigen Prozess geeignete Maschine nur eine begrenzte Stückzahl pro Produktionsprozess herstellen kann. Auch sind derartige Kunststoffhäute nicht mit Verkleidungsteilen gleichzustellen und bei ihrer Herstellung andersartig zu verarbeiten.

Es ist folglich die Aufgabe der vorliegenden Erfindung, ein Verkleidungsteil bereitzustellen, das einerseits aufwendige Schritte der Produktion reduziert und andererseits eine hohe Bauteilintegration mit einem ästhetischen Erscheinungsbild kombiniert.

Die Erfindung löst die Aufgabe dadurch, dass das Verkleidungsteil an Fahrzeugen eine Sichtschicht, mindestens einen in der Sichtschicht ausgebildeten Leuchtbereich, einen Träger, welcher die Sichtschicht aufnimmt, und mindestens ein Leuchtmittel zum mittelbaren oder unmittelbaren Beleuchten des Leuchtbereichs aufweist.

Vorteilhafterweise kann mit dieser Anordnung der mindestens eine Leuchtbereich ein Symbol darstellen, das aus dem Hintergrund beleuchtet wird.

Ein bevorzugter Ort eines solchen Verkleidungsteils findet sich innerhalb von Fahrzeugen, insbesondere in Fahrzeugen wie Automobile, Flugzeuge oder Boote.

In einer bevorzugten Ausgestaltung der vorliegenden Erfindung weist der Träger des Verkleidungsteils mindestens eine Ausnehmung auf, die sich zumindest am Ort des Leuchtbereichs befindet.

Dadurch ist es bei Anbringung mindestens eines Leuchtmittels möglich, dass dieses nicht nur in oder auf der Sichtschicht, sondern auch trägerseitig bezüglich der Sichtschicht angeordnet sein kann. Als Alternative kann das mindestens eine Leuchtmittel auch am Träger oder davon entfernt angeordnet sein. Somit kann das vom Leuchtmittel erzeugte Licht den Träger bzw. dessen Ausnehmung passieren.

Ferner ist es von Vorteil, wenn die mindestens eine Ausnehmung mit einem transparenten Kunststoff gefüllt ist, wobei es auch günstig sein kann, wenn der Träger ebenfalls aus Kunststoff aufgebaut ist. Hierbei kann die an den Leuchtbereich angeordnete Ausnehmung einen guten Zugang des Lichts zum Leuchtbereich gewährleisten.

Der für den Träger verwendete Kunststoff kann nicht transparent bzw. opak sein. Der Aufbau des Verkleidungsteils aus Kunststoff ist für die Massenproduktion von großem Vorteil, da der Kunststoff es erlaubt, eine Vielzahl von Verkleidungsteilen mittels Spritztechnik zu produzieren.

Zur Übertragung des von dem Leuchtmittel produzierten Lichtes ist es vorteilhaft, dass zwischen einem Leuchtbereich und dem mindestens eine Leuchtmittel mindestens ein Lichtübertragungselement angeordnet sein kann. Hierbei kann das Lichtübertragungselement innerhalb oder außerhalb des Trägers angeordnet sein. Auch eine Anordnung am Träger oder davon entfernt ist möglich.

Das Übertragungselement hat die Aufgabe, das Licht von einem Leuchtmittel, das nicht in der Nähe der Ausnehmung angeordnet ist, hin zur Ausnehmung bzw. zum Leuchtbereich zu leiten und das aufgenommenen Licht diffus abzugeben. Dieses Element kann dabei innerhalb oder außerhalb des Trägers angeordnet sein, d. h. das Leuchtmittel kann auch im Träger integriert sein. Der Ort der Anordnung kann von den weiteren Produktionsschritten bzw. von dem gewünschten Ergebnis der Beleuchtung abhängen.

In einer bevorzugten Ausgestaltung weist das Lichtübertragungselement mindestens einen Lichtleiter auf. Der Lichtleiter, welcher z. B. aus Glasfaser gebildet sein kann, erlaubt einen nahezu verlustfreien Transport von der Leuchtstärke des Leuchtmittels hin zu dem Leuchtbereich. Folglich kann sowohl der Energieverbrauch für ein Leuchtmittel als auch der Platzbedarf gesenkt werden. Somit ist es ausreichend, ein in seiner Größe kleines Leuchtmittel einzusetzen.

Zur besseren Einkopplung des Lichts in das Lichtübertragungselement ist es von Vorteil, wenn das Lichtübertragungselement mindestens eine Anschlussmöglichkeit für mindestens ein Leuchtmittel aufweist. Ferner kann mit der besonders ausgestalteten Anschlussmöglichkeit eine einfache Verbindung zwischen dem Leuchtmittel und dem Übertragungselement z. B. durch Stecken hergestellt werden. Somit wird das Auswechseln von Leuchtmitteln erleichtert.

Das Leuchtmittel kann innerhalb oder außerhalb des Trägers angeordnet sein. Eine Anordnung innerhalb erhöht günstigerweise die Bauteilintegration, wohingegen eine Anordnung außerhalb diese herabsetzt; jedoch ist das Leuchtmittel vorteilhafterweise nicht in seiner Größe auf das Verkleidungsteil beschränkt, wodurch zwar größere aber günstigere Leuchtmittel Verwendung finden können.

Günstigerweise weist das Verkleidungsteil zur besseren Einkopplung des vom Leuchtmittel erzeugten Lichts in das Lichtübertragungselement ein Lichtbündelungsbauteil auf. Dabei ist es vorteilhaft, wenn das Lichtbündelungsbauteil im Lichtweg zwischen dem Leuchtbereich und dem Leuchtmittel mindestens eine Linse aufweist. Diese Linse kann das erzeugte Licht des Leuchtmittels bündeln, wodurch die Leuchtkraft verstärkt werden kann.

Anhand der Verstärkung kann der Energieverbrauch für ein LED als Leuchtmittel gesenkt werden bzw. ein schwächeres LED mit der gleichen Leuchtkraft wie ein vergleichbar stärkeres ohne bündelnde Linse zum Einsatz kommen.

Auch ist es möglich, dass eine Linse im Bereich der Ausnehmung vorgesehen ist. Diese sammelt das aus dem Lichtübertragungselement austretende Licht und bündelt es auf oder in einen Leuchtbereich. Bei dieser Ausgestaltung ist die Linsenanordnung bevorzugt in der Form der zu beleuchtenden Abschnitte, so dass eine optimale Ausleuchtung erreicht werden kann. Der Vorteil einer solchen Linse ist, dass ein schwächeres LED als Leuchtmittel einsetzbar wird bzw. ein stärkeres nicht mit voller Leistung betrieben werden muss, was sich positiv auf die Lebensdauer des stärkeren LEDs auswirkt.

Ferner ist es möglich, dass das Lichtbündelungsbauteil an die Form der Anschlussmöglichkeit des Lichtübertragungselements angepasst ist. Bevorzugt weist das Lichtbündelungsbauteil eine Aufnahme für das Leuchtmittel auf. Durch die Anpassung der Anschlussmöglichkeit des Lichtübertragungselements an das Lichtbündelungsbauteil kann der Wirkungsgrad der Einkopplung des Lichts vom Lichtübertragungselement in das Lichtbündelungsbauteil erhöht werden.

Auch ist zur Verstärkung der Leuchtkraft vorteilhaft, wenn das Lichtbündelungsbauteil mindestens eine lichtreflektierende Fläche (Reflektorfläche) aufweist. Diese Reflektorfläche reflektiert Licht ähnlich einem Spiegel. Somit kann das Licht, das ein Leuchtmittel in die entgegengesetzte Richtung des Lichtübertragungselementes abstrahlt, reflektiert und ebenfalls in das Lichtübertragungselement eingekoppelt werden. Folglich erhöht sich der Wirkungsgrad der Anordnung, wodurch Energie eingespart werden kann.

Durch die Kombination von Reflektorfläche und Linse kann ein sehr effizientes Lichtbündelungsbauteil geschaffen werden, welches die oben genannten Eigenschaften verstärkt bzw. weiter verbessert.

Bei einer weiteren bevorzugten Ausbildung der Erfindung weist das Verkleidungsteil mindestens einen Sensor auf, wobei dieser bevorzugt trägerseitig angebracht ist. Der Sensor erfüllt die Aufgabe, an ihn gerichtete Eingaben zu detektieren und diese an eine Regelung weiterzusenden.

Das durch den Leuchtbereich auf der Oberfläche des Verkleidungsteils gebildete Symbol stellt bei Draufsicht eine Piktogramm dar, mit welchem ein Benutzer eine bestimmte Information und einen Befehl wie z. B. "Beleuchtung an/aus;", "Heckscheibenheizung an/aus", "Belüftung stärker/schwächer" usw. verbindet. Zur Ausführung des Befehls kann das Verkleidungsteil im Inneren mit einem Sensor ausgestattet sein, der es ermöglicht, den Befehl aufzunehmen bzw. zu erkennen.

Hierbei ist es günstig, wenn der Sensor als kapazitiver Sensor ausgeführt ist, der Veränderungen des elektrischen Feldes detektiert. Auch ist es möglich, dass der Sensor als Temperatursensor ausgeführt ist.

Beide Möglichkeiten eröffnen die Detektion eines Fingers einer bedienenden Person, ohne dass das Verkleidungsteil berührt werden muss. So ist es beispielsweise möglich, die Lichtdurchlässe von dem unbeleuchteten in den beleuchteten Zustand zu versetzten. Folglich werden die Symbole, dargestellt von den Lichtdurchlässen, jetzt erst sichtbar und somit bedienbar. Der Befehl, der sich hinter dem nun leuchtenden Symbol verbirgt, wird durch längeres Verharren des Fingers in naher Umgebung des Symbols bzw. direkt vor dem Symbol erteilt. Eine Berührung des Verkleidungsteils ist hierbei nicht notwendig.

Es reicht mithin aus, mit einer Bewegung an dem Verkleidungsteil bzw. dem Bereich der Symbole vorbeizuwischen, um die in dem Verkleidungsteil integrierten Symbole zu illuminieren.

Ebenfalls ist es möglich, dass vor Detektion eines Fingers einer bedienenden Person die Lichtdurchlässe zur besseren optischen Wahrnehmung bereits schwach, aber erkennbar beleuchtet sind. Diese schwache Beleuchtung kann z. B. in der Farbe Weiß realisiert sein. Nach Illumination des Verkleidungsteils durch Vorbeiwischen im Bereich der Symbole kann die Beleuchtungsstärke intensiviert werden, um die Befehlsbereitschaft anzuzeigen. Nachdem ein Befehl wie beispielsweise "Beleuchtung an" an das entsprechende Symbol erteilt bzw. von dem darunter befindlichen Sensor detektiert wurde, kann die hell aufleuchtende Farbe des aktivierten Symbols von der Farbe Weiß in z. B. die Farbe Rot geändert werden. Dies geschieht durch Abschalten des einen Leuchtmittels und durch Anschalten eines anderen. Nach Befehlserteilung leuchtet das Symbol intensiv in der Farbe Rot. Nachdem eine Zeitspanne von ca. 1 - 15 Sekunden verstrichen ist, kann die Beleuchtungsstärke aus dem intensiv leuchtenden Modus in einen schwach leuchtenden Modus wechseln. Um den Befehl zu widerrufen, sind die oben genannten Schritte zu wiederholen.

Zudem ist es möglich, dass in dem Verkleidungsteil ein lichtmessendes Bauteil angeordnet ist, welches die Intensität des Umgebungslichts messen kann. Das Bauteil kann direkt an einem Leuchtbereich angeordnet sein, so dass es die Umgebungslichtstärke gut erfassen kann. Des Weiteren hat das Bauteil einen direkten Einfluss auf die Leuchtstärke der Leuchtmittel, da je nach Tageszeit die Leuchtstärke für die diversen Symbol- bzw. Befehlsstatus angepasst werden kann. Folglich kann somit eine Tag-/Nachtbeleuchtung für die Symbole umgesetzt werden.

Alternativ ist es möglich, dass der Sensor ein Drucksensor ist. Hierbei ist es besonders günstig, wenn der Drucksensor als Piezoelement ausgebildet ist. Durch diese Ausführung wird ein anderes Prinzip nutzbar gemacht, nämlich das der Berührung. Somit muss ein Symbol berührt werden, um einen Befehl zu erteilen.

In diesem Zusammenhang ist die Kombination eines kapazitiven Sensors mit einem Drucksensor besonders bevorzugt. Dabei ist es möglich, dass der kapazitive Sensor das Annähern eines Fingers einer bedienenden Person detektiert und somit ein Leuchtmittel bzw. ein LED aktiviert. Hierdurch wird dem Bediener die Befehlsmöglichkeit auf das leuchtende Bediensymbol eröffnet. Der durch den Finger erzeugte Druck auf das Bediensymbol wird dann durch den Drucksensor detektiert. Der Befehl kann nun von einer Regelung umgesetzt werden. In diesem Kontext kann man auch von einem Befehlsablauf für den Bediener mit der Reihenfolge "Erkennen, Wahrnehmen und Berühren" sprechen.

Aus Gründen der Effektivität des Sensors ist dieser bevorzugt an der mindestens einen Ausnehmung des Trägers angeordnet. Denn je näher der Sensor an der Sichtschicht, desto effektiver kann dieser seine Aufgabe erfüllen. Somit können störende Umwelteinflüsse auf den Sensor ausgeschlossen werden. Folglich kann auch alternativ der mindestens eine Sensor innerhalb des Trägers angeordnet sein. Hierbei ist es zum Ausschluss von Umwelteinflüssen besonders bevorzugt, wenn der mindestens eine Sensor innerhalb mindestens einer Ausnehmung des Trägers angeordnet ist.

Zudem ist es möglich, dass der Sensor sowohl in der Ausnehmung des Trägers als auch innerhalb des übrigen Trägers angeordnet ist. Mittels dieser Ausbildung kann ein Bereich als Detektierfläche dienen, der größer ist als die Fläche der Ausnehmung. Somit ist ein Bediener nicht gezwungen, das Piktogramm direkt mit dem Finger "zu treffen", sondern es genügt in diesem erweiterten Bereich, den Finger aufzulegen. Dies erhöht den Bedienkomfort.

Bei einer besonders bevorzugten Ausbildung weist das Verkleidungsteil mindestens ein Haptikelement auf, wobei dieses trägerseitig angeordnet sein kann. Dieses ermöglicht es dem Bediener, ein Feedback zu geben ähnlich einem mechanischen Schalter, der beim Eindrücken einrastet. Das Element erhöht den Bedienkomfort, da die bedienende Person sofort die Information über das korrekte Bedienen der gewollten Funktion erhält. Auch kann somit eine Doppelbedienung dem Bediener vermittelt werden, wenn dieser versehentlich zweimal hintereinander denselben Befehl ausführt.

Aus Energieersparnisgründen und aus Gründen der Erzeugung von Vibrationen sowie deren Übertragung von dem Haptikelement zum Finger bzw. zur Außenschicht des Verkleidungsteils ist es besonders günstig, dass das mindestens eine Haptikelement zwischen dem Sensor und der Sichtschicht angeordnet ist.

Somit kann das Haptikelement kleiner und folglich auch schwächer ausgeführt sein, da wenig umgebendes Material in Schwingung versetzt werden muss.

Ferner ist es günstig, wenn ein Haptikelement eine schwingende Masse aufweist. Die durch die schwingende Masse erzeugten Vibrationen sind dann von einer bedienenden Person wahrnehmbar. Je näher sich das Haptikelement an der Sichtschicht befindet, umso kleiner kann die schwingende Masse ausgeführt sein. Je kleiner die schwingende Masse, desto dünner, eleganter und gewichtsoptimierter kann das Verkleidungsteil ausgeführt sein.

Bei einer weiteren Ausführungsvariante weist das Haptikelement mindestens ein Piezoelement als schwingende Masse auf. Dabei kann das Piezoelement sowohl als Drucksensor als auch als Haptikelement fungieren. Speziell bei Piezoelementen, zu denen die Piezokeramik zählt, ist die Symbiose aus Aktor und Sensor realisierbar. Die bevorzugte Ausführung des Drucksensors als Piezoelement ist in der Einfachheit der Ausführung eines solchen Drucksensors zu sehen. Somit wird Bauraum eingespart, da ein weiterer Sensor bzw. Aktor nicht nötig ist. Zudem sind Piezoelemente unter den richtigen Einsatzbedingungen extrem zuverlässige Bauteile, wodurch für das Verkleidungsteil eine hohe Lebensdauer gewährleistet wird.

Als alternative Ausführung eines Haptikelementes ist es möglich, dass das Haptikelement ein Thermoelement zum Beheizen eines Bereichs der Zierleiste auf eine bestimmte Temperatur aufweist. Um ein Bedienelement, das durch ein Symbol dargestellt ist, erfühlbar für einen Bediener zu gestalten, ist es möglich, abwechselnd temperierte Bereiche entlang eines Verkleidungsteiles anzuordnen. Somit wird ein Befehl erfühlbar, ohne das eine Veränderung der glatten Außenfläche notwendig ist. Diese Funktion ist besonders für Automobile von Nutzen, da hier einem Fahrer durch das haptische Feedback ein schnelles und sicheres Erteilen von Befehlen ermöglicht wird.

Hierbei ist es bevorzugt, dass das Thermoelement als Peltier-Element ausgebildet ist. Diese Ausbildung ermöglicht nicht nur das Beheizen eines Bereiches, sondern auch dessen Kühlung.

Günstigerweise ist das Verkleidungsteil mit mindestens einem Sensor oder mindestens einem Haptikelement mit einer Regelung verbunden. Diese Regelung übernimmt mit ihrem Mikroprozessor die Aufgabe der Auswertung und Weiterleitung von Befehlen. Hierbei ist es aus Platzersparnis möglich, die Regelung in oder an dem Verkleidungsteil anzuordnen.

Auch ist es günstig, wenn die Regelung mindestens einen Ausgang und/oder mindestens einen Eingang aufweist. Somit ist diese in der Lage, mehrere Sensoren und Aktoren zu regeln, wodurch ebenfalls Bauraum für mehrere Regelungen eingespart wird.

Zur Regelung des gesamten Verkleidungsteils ist es von Vorteil, wenn das Verkleidungsteil mit mindestens einem Sensor oder mit mindestens einem Haptikelement mit einer Regelung verbunden ist.

Bei Aktivierung des Sensors wird ein Eingangssignal von einem Sensor an den Mikroprozessor gesendet. Dieser verarbeitet das Eingangssignal und erzeugt seinerseits ein Ausgangssignal. Hierbei kann der Ausgang der Regelung mit einer Audioanlage verbunden sein, welche nach Erhalt eines Signals ein akustisches Signal wie z. B. ein Bestätigungsklicken erzeugt. Ebenso kann der Ausgang mit einem Haptikelement verbunden sein, um ein entsprechendes Signal in Form von Vibration an den Bediener zu melden.

In einer vorteilhaften Ausgestaltung kann mindestens eine Feedback-Einrichtung vorgesehen sein. Diese kann mindestens einen Sensor, mindestens ein Haptikelement und/oder mindestens ein Leuchtmittel aufweisen, wobei die Feedback-Einrichtung nicht nur visuelle und haptische Elemente umfassen kann, sondern auch akustische.

Vorteilhaft für den Produktionsprozess ist, wenn der opake Bereich des Trägers und die mit Kunststoff gefüllte Ausnehmung dasselbe Material aufweisen.

Des Weiteren ist es günstig, wenn die Sichtschicht Holz, Aluminium, Metall, textile Materialien oder Karbon aufweist.

Auch ist es bei dem Verkleidungsteil günstig, wenn es auf der Sichtschicht eine Außenschicht in der bevorzugten Ausgestaltung als Lackschicht aufweist, wobei die Lackschicht die Sichtschicht vollständig überzieht. Eine solche Lackschicht ist sehr widerstandfähig, wodurch die Lebensdauer des Verkleidungsteils erhöht wird. Ferner verleiht der Lack in seiner Funktion als Schutzschicht dem Bauteil Tiefenglanz und eine äußerst ansprechende Optik.

Vorteilhafte Ausgestaltungen und Merkmale gehen aus der nachfolgenden Beschreibung von Ausführungsbeispielen hervor, die in Verbindung mit den Zeichnungen erläutert sind.

### Kurzbeschreibung der Figuren

Es zeigen:

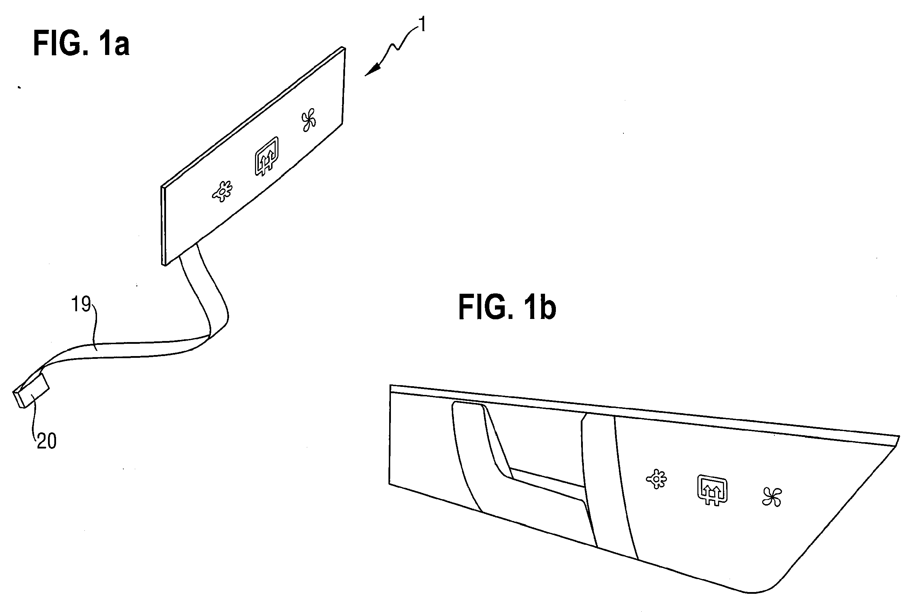

- Fig. 1a: eine perspektivische Ansicht eines erfindungsgemäßen Verklei- dungsteils,
- Fig. 1 b ein: Verkleidungsteil als Kraftfahrzeuginnenverkleidung,
- Fig. 2: eine Schnittansicht des Verkleidungsteiles in einer ersten Ausfüh- rung,
- Fig. 3: eine Schnittansicht durch ein Verkleidungsteil mit einem Lichtüber- tragungselement,
- Fig. 4a, 4d: eine Draufsicht auf ein Lichtübertragungselement,
- Fig. 4b, 4e: eine Seitenansicht eines Lichtübertragungselements,
- Fig. 4c: eine Draufsicht auf ein Lichtbündelungsbauteil,
- Fig. 5: eine Schnittansicht eines Verkleidungsteils mit einem Lichtüber-
- Fig. 6: tragungselement und mehreren Leuchtmitteln, eine Schnittansicht eines Verkleidungsteils in einer weiteren Aus- führung,
- Fig. 7: eine Schnittansicht eines Verkleidungsteils mit zwei Sensoren,
- Fig. 8: eine Schnittansicht eines Verkleidungsteils mit einem Haptikele- ment,
- Fig. 9: eine Schnittansicht eines Verkleidungsteils mit einer Steuerung,
- Fig. 10: eine Schnittansicht eines Verkleidungsteils mit einer Steuerung und einem Sensor,

### Beschreibung von in den Figuren

### dargestellten Ausführungsbeispielen

Figur 1a zeigt ein Verkleidungsteil 1 mit drei Symbolen auf der Vorderseite, die als Schalter dienen. Ferner weist das Verkleidungsteil einen Datenstecker 20 und ein Datenkabel 19 auf, die das Verkleidungsteil mit der Bordelektronik verbinden. In Figur 1b ist das Verkleidungsteil als Türinnenverkleidung eines Kraftfahrzeugs dargestellt.

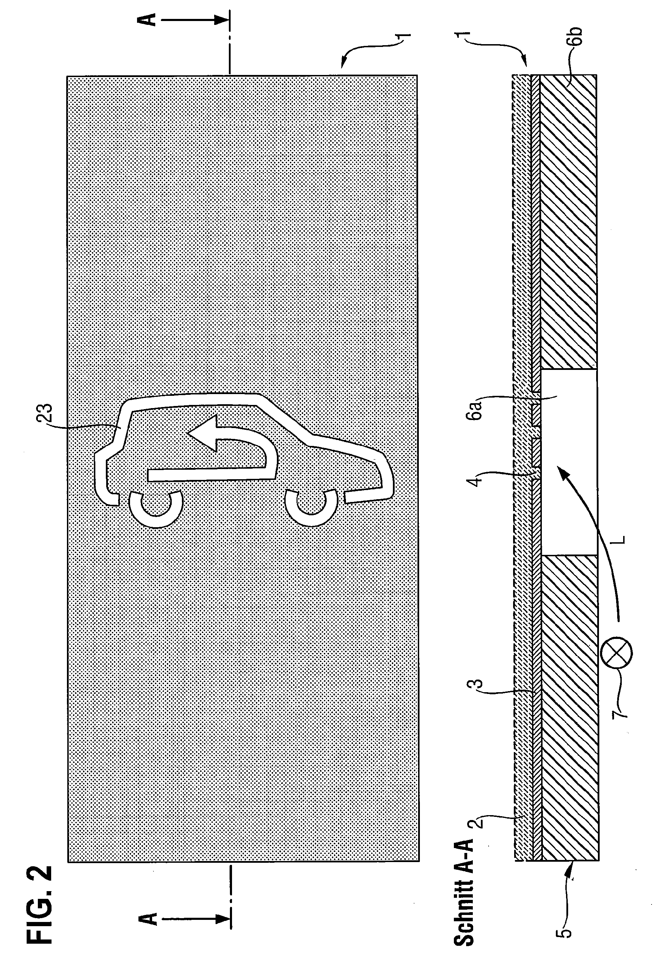

Figur 2 zeigt eine Teilansicht einer Oberfläche des erfindungsgemäßen Verkleidungsteils 1 mit dem Schnitt A-A.

Der Schnitt A-A zeigt das Verkleidungsteil 1 mit einer Sichtschicht 3 mit mindestens einem darin ausgebildeten Leuchtbereich 4, einem Träger 5, welcher die zum Betrachter gewandte Sichtschicht 3 aufnimmt und welcher mindestens eine Ausnehmung 6a zumindest am Ort des Leuchtbereichs 4 aufweist, und mit mindestens einem bezüglich der freien Sichtschicht trägerseitig angeordneten Leuchtmittel 7 zum mittelbaren oder unmittelbaren Beleuchten des Leuchtereichs.

Im Schnitt von Figur 2 sind drei in Kontakt stehende Schichten erkennbar, aus denen bei diesem Ausführungsbeispiel das Verkleidungsteil aufgebaut ist. Der Träger 5, die dickste bzw. die untere Schicht, besteht aus Kunststoff, wobei der Träger zwei Bereiche umfasst, eine transparente Ausnehmung 6a und einen nicht transparenten, d. h. opaken Hauptbereich 6b.

Die transparente Ausnehmung 6a ist dabei unterhalb von den Lichtdurchlässen 4 angeordnet, die die Sichtschicht 3 durchdringen. Sowohl der opake als auch der transparente Bereich erstrecken sich über die gesamte Dicke der Ausnehmung bis zur Sichtschicht 3, auf welches sie im rechten Winkel treffen.

Die Sichtschicht 3 ist die mittlere und zugleich dünnste Schicht zwischen der unteren Trägerschicht 5 und der oberen Außenschicht 2. Die Außenschicht 2 ist eine Lackschicht, welche als Schutzschicht für die Sichtschicht 3 dient.

Die Sichtschicht 3 wird auf den im Spritzgießverfahren hergestellten Träger 5 laminiert, wobei Klebemittel die Haftung der Sichtschicht an dem Kunststoffträger gewährleisten. Die Sichtschicht 3 weist dabei eingestanzte Lichtdurchlässe 4 auf, die bei Draufsicht ein Symbol bilden. Die Kanten der Lichtdurchlässe 4 stehen im rechten Winkel zur Oberfläche des Trägers 5 bzw. der Ausnehmung 6a.

Oberhalb der Sichtschicht 3 ist die lichtdurchlässige Lackschicht angeordnet, welche gleichmäßig aufgesprüht oder in einem Lackbad aufgebracht wurde. Hierbei fließt der Lack in die Lichtdurchlässe 4 der Sichtschicht 3, welche in Draufsicht das Symbol 23 für "Umluft" bilden. Auf diese Lackschicht ist verzichtbar was insbesondere bei metallenen Sichtschichten geschehen kann.

An dem Träger 5 ist das Leuchtmittel 7 angeordnet, das unterhalb des opaken Bereichs 6b z. B. durch Kleben befestigt ist.

Das Leuchtmittel 7 beleuchtet im angeschalteten Zustand die Lichtdurchlässe 4, wodurch das Symbol 23 erkennbar wird.

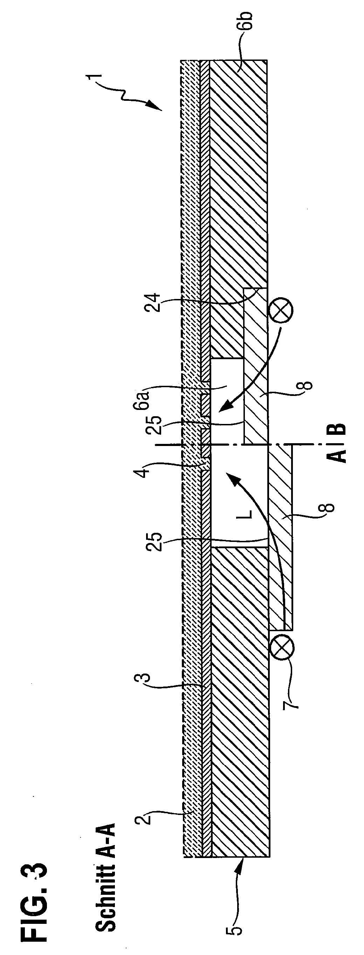

Figur 3 zeigt zwei Ausführungsvarianten A und B, die im Wesentlichen gleich zu Figur 2 sind, wobei sich im Lichtweg L zwischen Leuchtmittel 7 und Ausnehmung 6a ein Lichtübertragungselement 8 befindet.

In Ausführungsvariante A des Lichtübertragungselements 8 befindet sich das Leuchtmittel 7 außerhalb des Trägers 5 in direkter Anordnung an den Träger und das Lichtübertragungselement. Hingegen befindet sich in Variante B das Lichtübertragungselement 8 im Träger 5, jedoch auch im Lichtweg L zwischen Leuchtmittel 7 und Ausnehmung 6a.

In beiden Ausführungsvarianten ist das Leuchtmittel 7 außerhalb des Verkleidungsteils 1 angeordnet, wobei beide Leuchtmittel 7 unterhalb des opaken Bereichs angebracht sind.

Der Unterschied zwischen den beiden Ausführungsvarianten A und B ist, dass in Variante B das Lichtübertragungselement 8 sich sowohl im Inneren des opaken Bereichs als auch im Inneren der mit transparentem Kunststoff gefüllten Ausnehmung (6b, 6a) befindet, wohingegen das Übertragungselement 8 in Variante A unterhalb beider Bereiche angeordnet ist.

In Variante B ist das Lichtübertragungselement 8 in einem Freiraum 24 angeordnet, welcher die Größe des Lichtübertragungselements 8 aufweist. Der Freiraum 24 ist beim Herstellungsprozess in Form und Größe des Lichtübertragungselements 8 ausgespart worden, wobei dieses im Anschluss in den Freiraum 24 eingebracht wurde. Durch diese Aussparung ist Material in der Ausnehmung 6a und im opaken Bereich 6b eingespart worden, wodurch beide Bereiche in der nahen Umgebung unterhalb der Lichtdurchlässe 4 in der Höhe vermindert sind. Diese Höhe entspricht der Höhe des Lichtübertragungselements 8, so dass bei dessen Einbringung bzw. Befestigung an den Träger 5 die beiden unteren Kanten vom Lichtübertragungselement 8 und vom Träger 5 auf gleicher Höhe abschließen. Somit bleibt das Verkleidungsteil 1 in der Höhe konstant. Als Befestigungsmittel zwischen Übertragungselement 8 und Träger 5 dient Klebstoff oder eine Presspassung.

Ausführungsvariante A benötigt den beschriebenen Freiraum 24 nicht, wodurch diese kein Material im Inneren des Trägers 5 einspart. In Variante A ist das Lichtübertragungselement 8 mittels Klebstoff direkt an dem Träger 5 befestigt.

Aufgrund der Anordnung des Lichtübertragungselements 8 im Lichtweg L leitet es das von dem Leuchtmittel 7 erzeugte Licht hin zu der Ausnehmung 6a bzw. hin zu dem Leuchtbereich 4.

Des Weiteren zerstreut das Element 8 das von einer punktförmigen Lichtquelle erzeugte Licht auf die Oberfläche 25 des Lichtübertragungselements 8. Somit wird das Licht von dem Leuchtmittel 7 in das Lichtübertragungselement 8 "*eingespeist*" und in Richtung der Ausnehmung 6a weitergeleitet, wobei das Licht gleichmäßig auf der Oberfläche des Lichtübertragungselements 8 zerstreut wird.

Durch das Einkoppeln des Lichts von dem Lichtübertragungselement 8 in die mit transparentem Kunststoff gefüllte Ausnehmung 6a werden nun die Lichtdurchlässe 4 gleichmäßig durch das Leuchtmittel 7 ausgeleuchtet. Nach Austritt des Lichts aus den Lichtdurchlässen 4 und dem Durchdringen der klaren Außenschicht 2 ist es einer Person möglich, das beleuchtete Symbol zu erkennen.

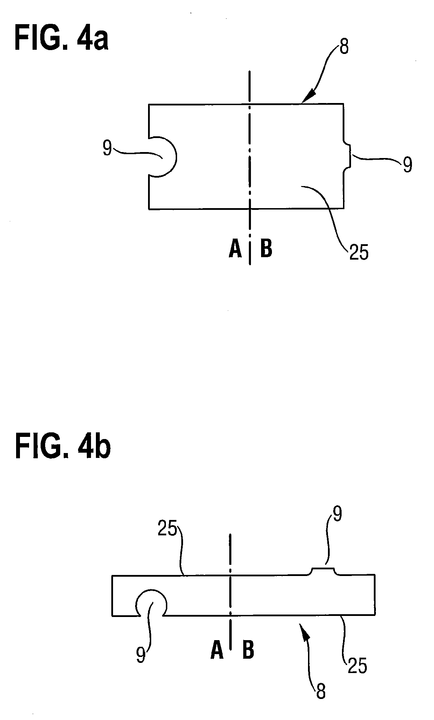

In Figur 4a ist ein rechteckiges Lichtübertragungselement 8 in Draufsicht auf die

Oberfläche 25 dargestellt. Dieses offenbart eine Anschlussmöglichkeit 9 mit zwei Möglichkeiten der Ausführung. Variante A des Lichtübertragungselements 8 zeigt eine Anschlussmöglichkeit 9 für ein Leuchtmittel 7. Die hier dargestellte Anschlussmöglichkeit ist in Form eines Halbzylinders ausgeführt, welcher um mehr als die Hälfte seiner Form von der Anschlussmöglichkeit 9 umfasst wird. Anhand dieser Form der Anschlussmöglichkeit 9 ist ein Leuchtmittel 7 oder ein Lichtbündelungsbauteil 10 mit der entsprechenden Gegenform aufnehmbar.

Hierbei fixieren Klebemittel und/oder eine Presspassung die Verbindung zwischen Anschlussmöglichkeit 9 und Leuchtmittel 7 oder Lichtbündelungsbauteil 10.

Variante B des Lichtübertragungselements 8 zeigt eine weitere Ausführungsform einer Anschlussmöglichkeit 9. Hierbei ist die Anschlussmöglichkeit 9 als eine Nase nach außen ausgeformt, so dass es möglich ist, ein Leuchtmittel 7 oder ein Lichtbündelungsbauteil 10 mittels geeigneter Befestigungsmittel an dieser Nase zu fixieren.

Varianten A und B aus Figur 4b zeigen weitere Ausführungsvarianten, bei welchen sich jeweils eine Anschlussmöglichkeit 9 auf einer der Oberflächen 25 befindet. Hierbei sind die Befestigungsmöglichkeiten analog ausgeführt zu denen der Varianten A und B aus Figur 4a.

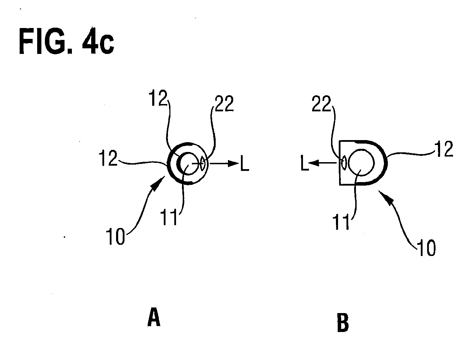

Figur 4c zeigt die Lichtbündelungsbauteile 10, die an die in Figur 4a bzw. 4b dargestellten Anschlussmöglichkeiten 9 angeordnet werden.

Dabei weist das Lichtbündelungsbauteil 10 für die Variante A aus Figur 4a eine zylindrisch runde Form auf, welche in ihrer Mitte eine ebenfalls zylindrisch runde Aufnahme 11 für ein Leuchtmittel 7 hat. Die andere Variante ähnelt einer an den kleinen Halbachsen abgeschnittenen Ellipse, welche ebenfalls eine zylindrisch runde Aufnahme 11 für ein Leuchtmittel aufweist.

Des Weiteren zeigt Figur 4c, dass das Lichtbündelungsbauteil 10 eine lichtreflektierende Fläche - eine Reflektorfläche 12 - aufweist, welche auf der Außenseite des Lichtbündelungsbauteils 10 und/oder auf der Innenseite der Aufnahme 11 aufgebracht ist.

Diese Reflektorfläche 12 umgreift die Form des Lichtbündelungsbauteils 10 bzw. des Leuchtmittels 7 nicht vollständig, wodurch diese die Form eines hohlen Halbzylinders beschreibt. Somit gibt es für das reflektierte Licht weg von der konkaven, halbzylindrisch hohlen Reflektorfläche 12 einen freien Weg aus dem Lichtbündelungsbauteil 10.

Auf dem Lichtweg L, der von der konkaven Oberfläche der Reflektorfläche 12 weg zeigt, ist eine Linse 22 dargestellt, die das Licht des Leuchtelements auf dem Weg in das Lichtübertragungselement bündelt, um dessen Intensität zu erhöhen.

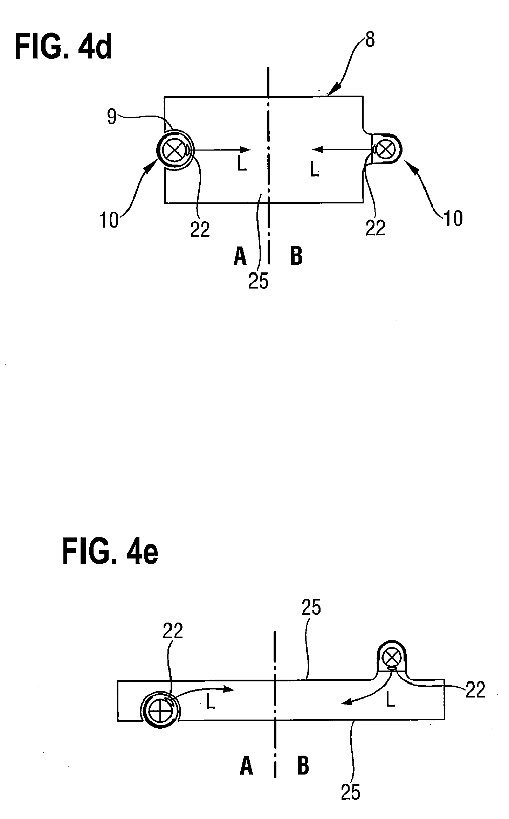

Figur 4d zeigt in der Variante A das Leuchtmittel 7 mit einem Lichtübertragungselement 8 und einem Lichtbündelungsbauteil 10 im zusammengebauten Zustand.

Hierbei setzt sich die Variante A mit dem Lichtbündelungsbauteil 10, dem Leuchtmittel 7 und dem Lichtübertragungselement 8 aus den gleichnamigen Varianten der Figuren 4a und 4c zusammen. Gleiches gilt für Variante B in Figur 4d.

In Figur 4e ist der Zusammenbau vom Lichtbündelungsbauteil 10, dem Leuchtmittel 7 und dem Lichtübertragungselement 8 der Varianten A und B aus den Figuren 4b und 4c dargestellt. In Variante A aus Figur 4e ist das Lichtbündelungsbauteil 8 gedreht eingesetzt, wodurch das Licht besser in Richtung des zu erhellenden Lichtübertragungselements 8 eingekoppelt wird.

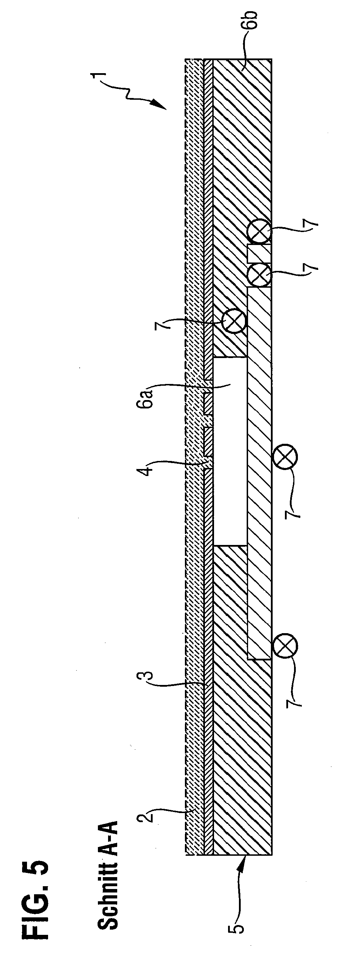

Das Ausführungsbeispiel aus Figur 5 zeigt einen Schnitt durch das Verkleidungsteil 1 aus Figur 2. Diese Ausführungsvariante beinhaltet ein Lichtübertragungselement 8 mit mehreren Leuchtmitteln 7.

Hierbei sind die Leuchtmittel 7 innerhalb und außerhalb des Trägers 5 angeordnet, wobei sich das Lichtübertragungselement 8 sowohl in die Ausnehmung 6a als auch in den opaken Bereich 6b erstreckt.

Bei der Anordnung des Leuchtmittels außerhalb des Trägers 5 sind zwei Möglichkeiten aufgezeigt, wo diese befestigt sind. So ist ein Leuchtmittel 7 unterhalb der mit transparentem Kunststoff gefüllten Ausnehmung 6a und somit unter dem Leuchtbereich 4 und in direktem Kontakt zu dem Lichtübertragungselement 8 angebracht. Das andere Leuchtmittel 7 ist zwar auch direkt am Lichtübertragungselement 8 befestigt, jedoch ist dieses neben den Lichtdurchlässen 4 bzw. dem transparenten Bereich 6a und unter dem opaken Bereich 6b angeordnet.

Die Leuchtmittel 7, die im Träger 5 angeordnet sind, befinden sich in direkter Nachbarschaft zum Übertragungselement 8. Hierbei ist ein Leuchtmittel neben dem Lichtübertragungselement 8 mit Kontakt zur unteren Kante ausgeführt. Das andere Leuchtmittel befindet sich an dem Lichtübertragungselement 8, jedoch ist dieses zwischen der Sichtschicht 3 und dem Übertragungselement 8 angeordnet.

Ein weiteres Leuchtmittel 7 ist ähnlich Figur 4e, Variante A innerhalb des Lichtübertragungselements 8 angebracht, wobei das Leuchtmittel 7 in der Größe der Höhe des Lichtübertragungselements 8 ausgebildet ist.

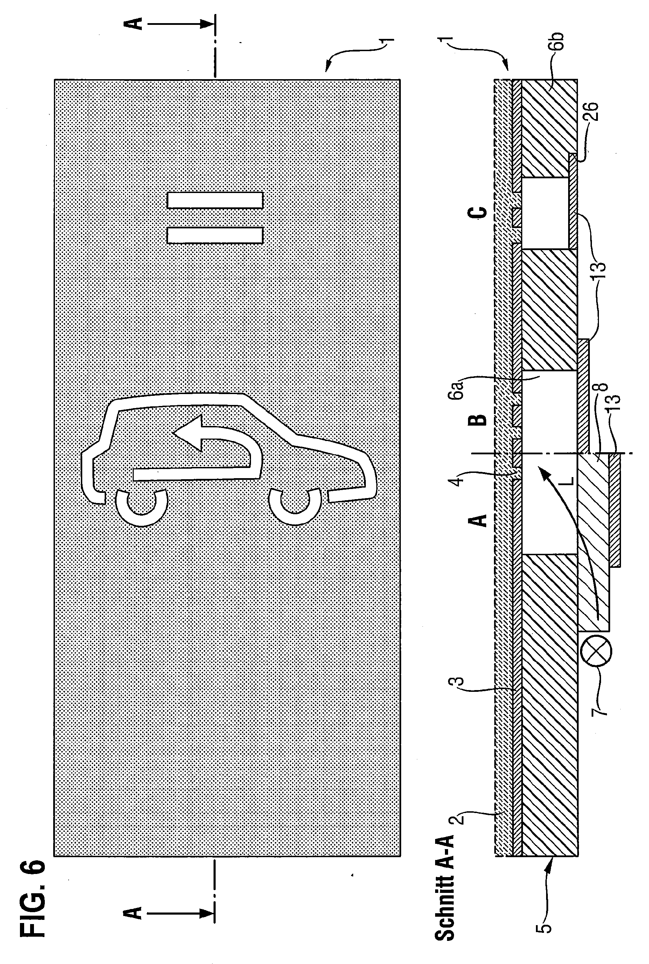

In Figur 6 ist eine Ausführungsvariante des Verkleidungsteils 1 mit einem Sensor 13 in drei Ausführungsvarianten A, B und C gezeigt.

In Variante A ist der Sensor 13 mittelbar an dem Träger 5 angeordnet. Zwischen Träger 5 und Sensor 13 befindet sich das Lichtübertragungselement 8. In Variante B ist der Sensor 13 unmittelbar an dem Träger 5 befestigt, wodurch er um die Höhe des Lichtübertragungselements 8 näher an der Lackschicht 2 ist.

Sowohl bei Variante A als auch bei Variante B erstreckt sich der Sensor 13 über die Ausnehmung 6a hinaus in den angrenzenden Bereich 6b. Jedoch ist die seitliche Erstreckung des Lichtübertragungselements 8 in Variante A größer bzw. ein Vielfaches des Sensors 13.

Variante C zeigt einen Sensor 13, der sich in der Ausnehmung 6a und im opaken Bereich 6b befindet. Jedoch befindet dieser sich nur mit seinem rechten Ende im opaken Bereich 6b, wohingegen das linke Ende bündig an den Bereich 6b anschließt.

Hierzu wurde bei der Herstellung des Trägers 5 in den Bereichen 6a, 6b ein um die Höhe des Sensors freibleibender Raum 26 konstruiert, welcher den Sensor 13 aufnehmen kann. Somit ist der Sensor 13 um seine eigene Höhe näher an die Lackschicht 2 gerückt.

Bei den Varianten A und B ist der Sensor an dem Übertragungselement 8 mit einem Befestigungsmittel befestigt. In Variante C dient zur Befestigung eine leichte Presspassung von Sensor 13 und Form 26.

Der Sensor 13 ist als kapazitiver Sensor ausgeführt. Das durch den Sensor erzeugte elektrische Feld ist in Richtung der Lackschicht 2 ausbildet. Durch Einbringen eines Dielektrikums bzw. eines Fingers einer bedienenden Person in den Verlauf des elektrischen Feldes wird die Kapazität geändert. Diese Änderung detektiert der Sensor 13.

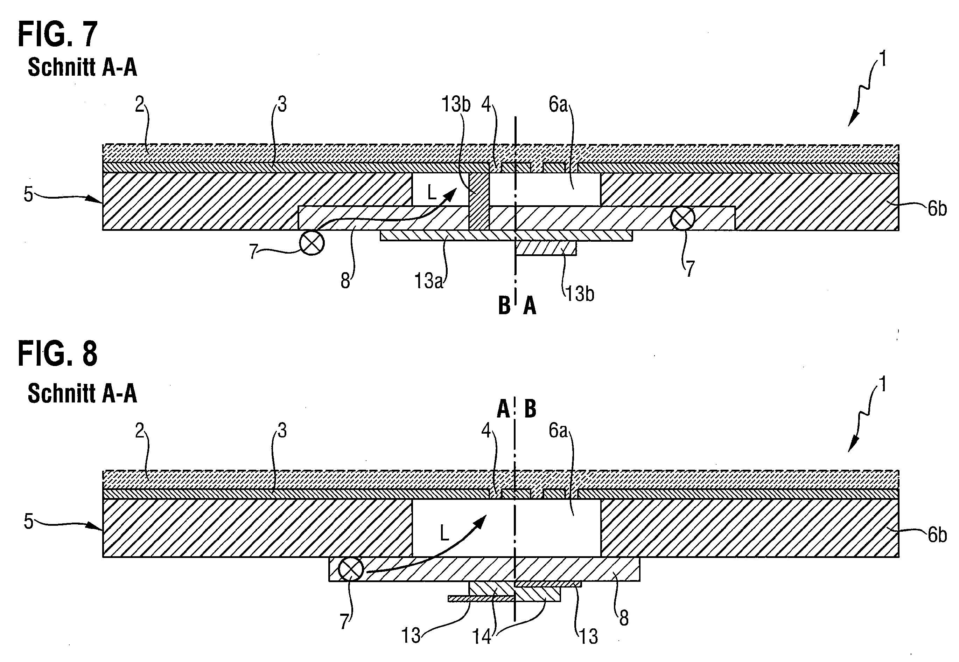

Figur 7 zeigt ein weiteres Ausführungsbeispiel eines Verkleidungsteils mit zwei Sensoren, wobei dieses Beispiel zwei Varianten A und B offenbart.

Bei beiden Varianten befindet sich im Inneren des Trägers 5 das Lichtübertragungselement 8, das sich von der mit transparentem Kunststoff gefüllten Ausnehmung 6a in den opaken Bereich 6b hinein erstreckt und in der seitlichen Erstreckung über der Erstreckung der Sensoren 13a, 13b liegt. Unterhalb des Lichtübertragungselements 8 und des Leuchtbereichs 4 ist ein kapazitiver Sensor 13a angeordnet, der sich über die Ausnehmung 6a in den Bereich 6b hinein erstreckt.

In Variante A ist dem kapazitiven Sensor 13a ein Drucksensor 13b aus einem Piezoelement nachgestellt. Hierbei ist der Drucksensor 13b in seiner seitlichen Ausdehnung so groß, dass er sich bis an den Übergang der Ausnehmung 6a zum opaken Bereich 6b ausdehnt, wobei er sich seitlich um ein freies Stück beabstandet.

Neben dem Sensor 13a und in direktem Kontakt mit dem Lichtübertragungselement 8 ist das Leuchtmittel 7 angeordnet. Gleiches gilt für die Variante B, welche sich in der Anordnung des Drucksensors 13b von Variante A unterscheidet.

Hier befindet sich der Drucksensor 13b zwischen dem kapazitiven Sensor 13a und der Sichtschicht 3, wobei sich das Piezoelement bzw. der Drucksensor 13b ausschließlich in der Ausnehmung 6a des Trägers 5 befindet. Hierbei durchdringt dieser die gesamte Höhe der Ausnehmung 6a und des Lichtübertragungselements 8, wobei der Drucksensor 13b sich neben und nicht unter einem Leuchtbereich 4 befindet. Folglich steht der Sensor 13b mit dem Sensor 13a in Kontakt.

Durch Anbringung unterhalb der Sichtschicht 3 wird sowohl das Detektieren eines Drucks auf das Piezoelement erleichtert als auch der Lichtweg vom Leuchtmittel hin zum Leuchtbereich 4 nicht bzw. nur minimal durch den Drucksensor gestört.

Figur 8 zeigt ein Verkleidungsteil 1 mit einem Sensor 13 und einem Haptikelement 14. Das Haptikelement 14 in der Ausführungsvariante A ist zwischen Sensor 13 und Sichtschicht 3 angeordnet, wohingegen es sich in der Ausführungsvariante B an den Sensor 13 anschließt.

Beiden Varianten gemeinsam ist die Anordnung des Lichtübertragungselements 8 außerhalb des Trägers 5 und in seitlicher Erstreckung, die über die Ausnehmung 6a und die seitliche Ausdehnung der Sensoren und der Haptikelemente 14 hinausreicht. Innerhalb des Lichtübertragungselements 8 ist ein Leuchtmittel 7 angeordnet, so dass sich in Summe die Ausführung nach Figur 5e, Variante A ergibt. Auch haben beide Haptikelemente 14 eine bewegliche Masse, deren Vibrationen zur Sichtschicht 3 übertragen werden.

In Variante A aus Figur 8 ist das Haptikelement 14 unmittelbar an das Übertragungselement 8 angeordnet. Im Anschluss daran befindet sich der Sensor 13, der hier als kapazitiver Sensor ausgebildet ist.

In Variante B ist der Sensor 13 unmittelbar an dem Übertragungselement 8 angeordnet, und der kapazitive Sensor 13 befindet sich im Anschluss. Bei dieser Ausbildung werden die vom Haptikelement erzeugten Vibrationen stärker und leichter bis hin zur Lackschicht übertragen, da hier die dämpfende Masse des Sensors 13 fehlt.

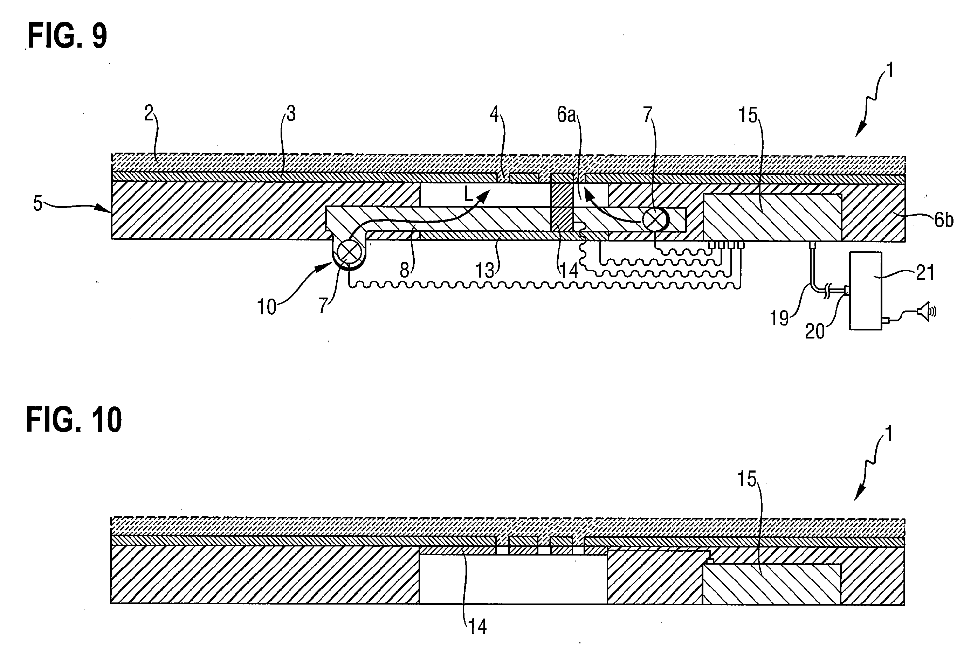

Figur 9 zeigt eine weitere Ausführungsform des Verkleidungsteils 1 mit einer Regelung 15 innerhalb des Verkleidungsteils 1 bzw. des Trägers 5 und einem Sensor 13 innerhalb der Ausnehmung 6a.

Unterhalb der Sichtschicht 3 und innerhalb der mit transparentem Kunststoff gefüllten Ausnehmung 6a ist ein Haptikelement 14 als Piezoelement ausgeführt, wodurch dieses sowohl als Sensor als auch als Aktor nutzbar ist. Das Haptikelement 14 ist so angeordnet, dass es nicht die Bereiche 4 verschließt. Es erstreckt sich von der Sichtschicht 3 bis zum Sensor 13, welcher innerhalb der Ausnehmung 6a angeordnet ist.

Der Sensor schließt mit der unteren Kante des Trägers 5 ab, so dass sich dieser eben in den Träger 5 einordnet. Zwischen Sensor 13 und Sichtschicht 3 ist das Lichtübertragungselement 8 mit Erstreckung über den transparenten Bereich 6a hinaus in den opaken Bereich 6b hinein angeordnet. Im opaken Bereich 6b ist auf der rechten Seite ein rotes Leuchtmittel 7 im Lichtübertragungselement 8 mit Lichtbündelungsbauteil 10 und Reflektorschicht 12 angeordnet, welches sich gleichzeitig innerhalb des Trägers 5 befindet. Hierbei weist die konkave Seite der Reflektorschicht 12 in Richtung des Haptikelementes 14. Auf der linken Seite ist ein weißes Leuchtmittel 7 angeordnet, das sich jedoch außerhalb des Bereichs 6b befindet. Dieses zweite Leuchtmittel 7 ist in einem Lichtbündelungsbauteil 10 mit Reflektorschicht 12 befestigt, welches an einer Nase, ähnlich der Ausführung aus Figur 4e - Variante B, angeordnet ist. Hierbei weist die konvexe Seite der Reflektorschicht 12 weg von der Sichtschicht 3, wobei das Leuchtmittel 7 außerhalb des Verkleidungsteils 1 angebracht ist.

Neben dem Lichtübertragungselement 8 ist eine Regelung 15 angeordnet, welche sich vollständig im opaken Bereich 6b befindet. Die Regelung 15 hat eine geringere Höhe als die des Trägers 5 und ist vom Lichtübertragungselement 8 beabstandet.

Die Regelung 15 weist fünf Anschlussmöglichkeiten auf, vier für die Leuchtmittel 7, das Haptikelement 14 und den Sensor 13 und einen Anschluss für ein Datenkabel 19 mit Eingängen, Ausgängen und einem Datenstecker 20, welcher die Verbindung zwischen Regelung 15 und einer Bordelektronik 21 herstellt. Kabel dienen als Verbindungsglied zwischen Sensoren 13, Aktor/Haptikelement 14, Leuchtmitteln 7 und Regelung 15.

Mittels dieser Kabel ist die Regelung 15 in der Lage, sowohl Signale zu empfangen als auch Signale zu senden. Somit wird bei einem Aktivierungsvorgang eines Symbols bzw. einer Befehlstaste ein sich annähernder Finger einer bedienenden Person von dem kapazitiven Sensor 13 detektiert.

Dieser Sensor 13 sendet ein Signal an die Regelung 15, welche das Aufleuchten des linken, weißen Leuchtmittels aktiviert.

Das von dem Leuchtmittel erzeugte Licht wird mittels des Lichtbündelungsbauteils 10 in das Lichtübertragungselement 8 verstärkt und eingekoppelt. Hierbei wird das Licht über die Fläche des Lichtübertragungselements 8 im Bereich der mit transparentem Kunststoff gefüllten Ausnehmung 6a verteilt und ausgekoppelt.

Folglich wird das Symbol, dargestellt von den Lichtdurchlässen 4, beleuchtet und für den Bediener deutlich sichtbar.

Die Berührung des Fingers einer Person auf der Außenschicht 2 oberhalb der Lichtdurchlässe 4 detektiert das Haptikelement 14 in Funktion eines Sensors. Das Haptikelement 14 sendet ein Signal an die Regelung 15, welche den aktivierten Zustand des Symbols durch Ausschalten des linken, weißen Leuchtmittels und des gleichzeitigen Einschaltens des rechten, roten Leuchtmittels 7 dem Benutzer signalisiert. Gleichzeitig lässt die Regelung den Bediener durch Vibration des Haptikelementes 14 erkennen, dass der Befehl erkannt wurde.

Parallel hierzu sendet die Regelung 15 ein Signal an die Bordelektronik 21 über das Datenkabel 19, wodurch der erteilte Befehl ausgeführt wird.

Nach Erhalt des Befehls von der Regelung 15 an die Bordelektronik 21 ertönt ein bestimmtes Geräusch aus einem Lautsprecher, welcher somit zusätzlich akustisch dem Benutzer ein Feedback über die Aktivierung einer Funktion gibt.

Die Regelung weist in ihrem Inneren einen Mikroprozessor auf (nicht dargestellt), der in der Lage ist, die Ein- und Ausgänge zu kontrollieren und entsprechende Signale weiterzuleiten bzw. zu verarbeiten.

Figur 10 zeigt eine weitere Ausführungsform des Verkleidungsteils 1 mit einem Haptikelement 14, welches ein Thermoelement zum Beheizen auf eine bestimmte Temperatur aufweist. Somit kann einem Benutzer mittels Temperatur vermittelt werden, ob eine Befehlstaste sich im aktivierten oder deaktivierten Zustand bzw. wo sie sich örtlich befindet. Ein solches Thermoelement ist im vorliegenden Fall aus einem Peltier-Element aufgebaut. Dieses Haptikelement 14 ist direkt unterhalb der Sichtschicht im Bereich der Lichtdurchlässe 4 und innerhalb der Ausnehmung 6a angeordnet. Die Höhe des Thermoelements liegt in der Höhe der Sichtschicht 3. Auch ist das Thermoelement mit der Regelung 15 über ein Kabel verbunden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. So liegt es z. B. im Schutzbereich der beschriebenen Erfindung, nicht dargestellte Kombinationen von z. B. mehreren Haptikelementen verschiedener Art sowie deren weiteren Ausführungsformen innerhalb oder außerhalb des Trägers anzuordnen.

### Bezugszeichenliste

- 1: Verkleidungsteil
- 2: Außenschicht
- 3: Sichtschicht
- 4: Leuchtbereich
- 5: Träger
- 6a: Ausnehmung (optional mit transparentem Kunststoff gefüllt)
- 6b: nicht transparenter, d. h. opaker Bereich
- 7: Leuchtmittel
- 8: Lichtübertragungselement
- 9: Anschlussmöglichkeit
- 10: Lichtbündelungsbauteil
- 11: Aufnahme
- 12: Reflektorfläche
- 13: Sensor
- 13a: kapazitiver Sensor
- 13b: Drucksensor
- 14: Haptikelement
- 15: Regelung
- 16: Ausgang
- 17: Eingang
- 18: Audioanlage
- 19: Datenkabel
- 20: Datenstecker
- 21: Bordelektronik
- 22: Linse
- 23: Symbol
- 24: Freiraum
- 25: Oberfläche des Lichtübertragungselements
- 26: Freiraum für Sensor

## Patentansprüche

1. Verkleidungsteil an Fahrzeugen
• mit einer Sichtschicht (3),
• mit mindestens einem in der Sichtschicht (3) ausgebildeten Leuchtbereich (4),
• mit einem Träger (5), welcher die Sichtschicht (3) aufnimmt, und
• mit mindestens einem Leuchtmittel (7) zum mittelbaren oder unmittelbaren Beleuchten des Leuchtbereichs (4).

2. Verkleidungsteil nach Anspruch 1, **dadurch gekennzeichnet, dass** der Träger (5) mindestens eine Ausnehmung (6a) zumindest am Ort des Leuchtbereichs (4) aufweist.

3. Verkleidungsteil nach Anspruch 1 oder 2, **dadurch gekennzeichnet, dass**
mindestens ein Leuchtmittel (7) bezüglich der Sichtschicht (3) trägerseitig angeordnet ist.

4. Verkleidungsteil nach einem der vorigen Ansprüche, **dadurch gekennzeichnet, dass** das Leuchtmittel in der Sichtschicht (3) oder am Träger oder davon entfernt angeordnet ist.

5. Verkleidungsteil nach einem der vorigen Ansprüche, **dadurch gekennzeichnet, dass** zwischen dem mindestens einen Leuchtmittel (7) und dem Leuchtbereich (4) mindestens ein Lichtübertragungselement (8) angeordnet ist.

6. Verkleidungsteil nach Anspruch 5, **dadurch gekennzeichnet, dass** das Lichtübertragungselement (8) mindestens einen Lichtleiter aufweist.

7. Verkleidungsteil nach einem der vorigen Ansprüche, **dadurch gekennzeichnet, dass** das Verkleidungsteil ein Lichtbündelungsbauteil (10) aufweist.

8. Verkleidungsteil nach Anspruch 7, **dadurch gekennzeichnet, dass** das Lichtbündelungsbauteil (10) im Lichtweg zwischen dem Leuchtmittel (7) und dem Leuchtbereich (4) mindestens eine Linse aufweist.

9. Verkleidungsteil nach den Ansprüchen 7 oder 8, **dadurch gekennzeichnet, dass** das Lichtbündelungsbauteil (10) mindestens eine lichtreflektierende Fläche (12) aufweist.

10. Verkleidungsteil nach einem der vorigen Ansprüche, **dadurch gekennzeichnet, dass** mindestens eine Feedback-Einrichtung vorgesehen ist, die haptische, akustische oder visuelle Elemente umfasst.

11. Verkleidungsteil nach den Ansprüchen 2 - 10, **dadurch gekennzeichnet, dass** das Verkleidungsteil mindestens einen Sensor (13) zur Detektion von Eingaben aufweist.

12. Verkleidungsteil nach Anspruch 11, **dadurch gekennzeichnet, dass** der mindestens eine Sensor (13) an der mindestens einen Ausnehmung (6a) des Trägers (5) angeordnet ist.

13. Verkleidungsteil nach den Ansprüchen11 oder 12, **dadurch gekennzeichnet, dass** der Sensor (13) als kapazitiver Sensor oder als Temperatursensor oder als Drucksensor ausgeführt ist.

14. Verkleidungsteil nach mindestens einem der vorigen Ansprüche, **dadurch gekennzeichnet, dass** es mindestens ein Haptikelement (14) aufweist.

15. Verkleidungsteil nach Anspruch 14, **dadurch gekennzeichnet, dass** das mindestens eine Haptikelement (14) mindestens ein Piezoelement und/oder mindestens ein Thermoelement aufweist.
